# EUROPÄISCHE PATENTSCHRIFT

(11) **EP 4 065 408 B1**
(45) Veröffentlichungstag und Bekanntmachung des Hinweises auf die Patenterteilung: **01.05.2024**
(21) Anmeldenummer: 21716337.7
(22) Anmeldetag: 30.03.2021
(51) Int. Cl.: B60L 53/16, H01R 13/15, H01R 13/53, H01R 13/533

(54) **VORRICHTUNG ZUM VERBINDEN VON HOCHVOLTLEITERN**
DEVICE FOR CONNECTING HIGH-VOLTAGE CONDUCTORS
DISPOSITIF DE CONNEXION DE CONDUCTEURS À HAUTE TENSION

(30) Priorität: 06.04.2020 DE 102020109562
(43) Veröffentlichungstag der Anmeldung: 05.10.2022
(73) Patentinhaber: Eugen Forschner GmbH, 78549 Spaichingen (DE)
(72) Erfinder: ACKERMANN, Janosch, 78549 Spaichingen (DE)
(74) Vertreter: Keller Schneider Patentanwaltsgesellschaft mbH
(86) Internationale Anmeldenummer: PCT/EP2021/058298
(87) Internationale Veröffentlichungsnummer: WO 2021/204595

(56) Entgegenhaltungen:
- EP-A1- 2 624 432
- EP-A2- 0 863 522
- EP-B1- 0 863 522

## Beschreibung

Die Erfindung betrifft eine Vorrichtung zum Verbinden von Hochvoltleitern umfassend wenigstens einen ersten Hochvoltleiter, wenigstens einen zweiten Hochvoltleiter, eine Einrichtung zur Aufnahme des ersten und zweiten Hochvoltleiters und wenigstens eine Verbindungsvorrichtung zum stromleitenden Verbinden des wenigstens einen ersten Hochvoltleiters mit dem wenigstens einen zweiten Hochvoltleiter gemäß dem Oberbegriff des Patentanspruchs 1.

Elektrische Verbindungen für eine Übertragung hoher elektrischer Leistungen werden bisher meistens als Schraubverbindungen ausgeführt. Derartige Verbindungen dürfen aus Sicherheitsgründen nur von entsprechend ausgebildetem und geprüftem Personal hergestellt bzw. wieder gelöst werden. In der Fertigung lassen sich die Anzugsmomente derartiger Schraubverbindungen und die davon abhängigen Übergangswiderstände zwischen den Hochvoltleitern prozesssicher überwachen. Bei einer Reparatur oder einem notwendigen Austausch von Komponenten in einer Werkstatt ist eine Verfügbarkeit von entsprechendem Personal nicht immer gegeben und eine prozesssichere Verbindung somit auch nicht immer gewährleistet. Somit besteht ein Bedürfnis nach einer Verbindungsvorrichtung für Hochvoltleiter, die ohne eine Schraubverbindung auskommt.

Eine gattungsgemäße Vorrichtung ist aus der DE 10 2012 201 124 A1 bekannt. Bei dieser weist eine zylindrische Verbindungsvorrichtung eine Vielzahl von längs verlaufenden Lamellen auf, die jeweils auf ihrer Innen-und Außenseite mit durch die Lamellen federnd gelagerten Kontakten versehen sind.

EP0863522 A2 zeigt eine Notabschaltvorrichtung zum Verbinden von Hochvoltleitern umfassend wenigstens einen ersten Hochvoltleiter, wenigstens einen zweiten Hochvoltleiter, eine Einrichtung zur Aufnahme des ersten Hochvoltleiters und zweiten Hochvoltleiters und wenigstens eine Verbindungsvorrichtung zum stromleitenden Verbinden des wenigstens einen ersten Hochvoltleiters mit dem wenigstens einen zweiten Hochvoltleiter. Auch weist die Vorrichtung eine Druckfeder auf.

Aufgabe der Erfindung ist es, eine Vorrichtung zum Verbinden von Hochvoltleitern zu schaffen, mittels der wenigstens zwei Hochvoltleiter ohne Verwendung eines Werkzeugs prozesssicher verbunden und auch wieder voneinander getrennt werden können.

Diese Aufgabe wird erfindungsgemäß durch eine Vorrichtung mit den Merkmalen des Anspruchs 1 gelöst. Vorteilhafte Ausgestaltungen der Erfindung sind in den Unteransprüchen angegeben.

Ein bevorzugtes Einsatzgebiet der Erfindung sind Anwendungen im Automobilbereich, insbesondere Anwendungen in der Elektromobilität.

Mit der vorliegenden Erfindung ist es möglich, eine prozesssichere Verbindung von Hochvoltleitern mit einer an die Übertragung der zwischen diesen fließenden Ströme bzw. übertragenen Leistungen anpassbaren Verbindungskraft zu erreichen, die noch dazu einfach zu bedienen ist.

Die erfindungsgemäße Vorrichtung zum Verbinden von Hochvoltleitern umfasst wenigstens einen ersten Hochvoltleiter, wenigstens einen zweiten Hochvoltleiter, eine Einrichtung zur Aufnahme des ersten und zweiten Hochvoltleiters und wenigstens eine Verbindungsvorrichtung zum stromleitenden Verbinden des wenigstens einen ersten Hochvoltleiters mit dem wenigstens einen zweiten Hochvoltleiter. Erfindungsgemäß weist die Verbindungsvorrichtung wenigstens einen mittels wenigstens einer Feder vorgespannten Kontaktbolzen zum Zusammenpressen des wenigstens einen ersten Hochvoltleiters mit dem wenigstens einen zweiten Hochvoltleiter auf, wobei die Verbindungsvorrichtung wenigstens einen Aufnahmeraum für wenigstens einen der Hochvoltleiter und ein Widerlager für die Federn bildet.

Durch die mittels der Federkennlinie und des beim Herstellen der Verbindung zurückgelegten Federweges wird eine eindeutige Anpresskraft definiert, die durch Veränderung dieser Parameter auch in einfacher Weise an unterschiedliche übertragende Ströme anpassbar ist.

In einer vorteilhaften Ausführungsform der Erfindung weist die Einrichtung zur Aufnahme der Hochvoltleiter wenigstens einen ersten Aufnahmeraum für den ersten Hochvoltleiter und wenigstens einen zweiten Aufnahmeraum für den zweiten Hochvoltleiter auf, die einen gemeinsamen offenen Verbindungsbereich aufweisen, der eine unmittelbar berührende Anlage des ersten Hochvoltleiters und des zweiten Hochvoltleiter aneinander ermöglicht. Die Aufnahmeräume sind an die Kontur der Hochvoltleiter angepasst, die beispielsweise als im Querschnitt rechteckige Stromschienen ausgebildet und in einfacher Weise von außen in die Aufnahmeräume einschiebbar sind. Die Aufnahmeräume bewirken somit zum einen eine formschlüssige Lagerung der Hochvoltleiter zumindest in zwei Dimensionen und bilden zum anderen auch ein Widerlager gegen die von der Feder ausgeübte Druckkraft.

Erfindungsgemäß ist vorgesehen, dass der Kontaktbolzen an einem Ende ein zur Anlage an einem der Hochvoltleiter geeignetes Druckstück aufweist. Dieses Druckstück weist besonders bevorzugt an seiner den Hochvoltleitern zugewandten Stirnseite eine kugelabschnittsförmige oder linsenförmige Kontur auf. Diese Kontur ermöglicht zum einen ein Ausweichen des Druckstücks gegen den Druck der Feder beim Einschieben eines Hochvoltleiters und zum anderen eine hohe punktförmig wirkende Anpresskraft des Druckstücks auf die beiden zusammen zu pressenden Hochvoltleiter. Bei Bedarf können auch mehrere nebeneinander oder hintereinander angeordnete Verbindungseinrichtungen zum Verbinden zweier oder mehrerer Hochvoltleiter vorgesehen sein. Gemäß einer weiteren besonders vorteilhaften Ausgestaltung der Erfindung ist vorgesehen, dass die Vorspannkraft der Feder mittels einer Einstellvorrichtung einstellbar ist. Dadurch ist die Vorrichtung in einfacher Weise an unterschiedlich dicke Hochvoltleiter oder an unterschiedliche Pakete aus mehreren übereinanderliegenden Hochvoltleitern und/oder an unterschiedlich starke zu übertragende Ströme bzw. elektrische Leistungen anpassbar.

Vorteilhaft sind die Aufnahmeräume für die ersten und zweiten Hochvoltleiter und zumindest ein weiterer Aufnahmeraum für wenigstens eine Verbindungsvorrichtung in einem gemeinsamen Gehäuseteil der Vorrichtung angeordnet. Dies ermöglicht eine besonders kompakte Bauweise und eine Vormontage der Verbindungsvorrichtungen in diesem Gehäuseteil vor dessen Verbindung mit benachbarten Gehäuseteilen.

Eine vorteilhafte Weiterentwicklung der Erfindung sieht vor, dass benachbart zu den Aufnahmeräumen für die Hochvoltleiter Kühlkanäle zur Führung eines insbesondere flüssigen Kühlmediums vorgesehen sind.

Eine besonders kostengünstige Herstellung der erfindungsgemäßen Vorrichtung ergibt sich dadurch, dass das die Aufnahmeräume bildende gemeinsame Gehäuseteil als Strangpressprofil ausgebildet ist. Derartige Strangpressprofile können auch mit komplexen Konturen der Aufnahmeräume kostengünstig als Meterware hergestellt und durch Ablängen an beliebiger Stelle an unterschiedlich große benötigte Vorrichtungen angepasst werden.

Besonders vorteilhaft ist es, wenn das Strangpressprofil aus einem hoch wärmeleitfähigen Kunststoff ausgebildet ist. Durch diese Materialauswahl werden mehrere Vorteile gleichzeitig erreicht:
- der Wärmeübergang von den Hochvoltleitern zu den Kühlkanälen funktioniert ausgezeichnet,
- komplexe Konturen der Aufnahmeräume sind in einem Extrusionswerkzeug für Kunststoff einfach darstellbar,
- die Vorrichtung ist gewichtssparend herstellbar, was insbesondere für eine Verwendung im Automobilbereich nützlich ist,
- der Kunststoff sorgt für eine hervorragende elektrische Isolierung der Hochvoltleiter gegenüber der Umgebung.

Eine vorteilhafte Ergänzung der Erfindung sieht vor, dass wenigstens zwei Kühlkanäle durch wenigstens einen Verbindungskanal verbunden sind, der in zumindest einem an wenigstens eine Stirnseite des Strangpressprofils dicht angrenzenden Abschlussteil ausgebildet ist. Durch ein derartiges Abschlussteil mit darin integrierten Verbindungskanälen ist zum einen ein sauberer stirnseitiger Abschluss eines als Strangpressprofil hergestellten Gehäuseteils gewährleistet und wird zum anderen eine einfache mäanderförmige Verbindung und Führung eines Kühlmediums durch die Kühlkanäle möglich.

Zwischen dem Abschlussteil und dem stirnseitigen Ende des Strangpressprofils ist bevorzugt eine Dichtung angeordnet, in der die Verbindungsbereiche zwischen den Kühlkanälen und den Verbindungskanälen entsprechend ausgespart sind. Anstelle einer Verbindung mittels einer Dichtung und einer Verschraubung kann das Abschlussteil auch dauerhaft mit der Stirnseite des Strangpressprofils dicht verklebt werden.

Vorteilhaft weist das die Aufnahmeräume bildende Gehäuseteil Befestigungsvorrichtungen zur Verbindung mit wenigstens einem benachbarten Gehäuseteil auf. Diese können als senkrecht zur Extrusionsrichtung des Gehäuseteils eingebrachte Gewindebohrungen oder alternativ dazu als unmittelbar im Extrusionsverfahren mit geformte formschlüssige Aufnahmeräume für Sechskant- oder Vierkantmuttern ausgebildet sein.

Das Einpressen eines Hochvoltleiters in die erfindungsgemäße Vorrichtung wird zusätzlich zur kugeligen oder linsenförmigen Kontur des Druckstücks dadurch erleichtert, dass der dem Kontaktbolzen bzw. dem Druckstück zugewandte Hochvoltleiter an einem Ende eine seine Dicke vermindernde, keilförmige Abschrägung aufweist.

Nachfolgend wird ein Ausführungsbeispiel der Erfindung unter Bezugnahme auf die Zeichnungen näher erläutert. Es zeigt:
- Fig. 1: eine seitlich aufgebrochene perspektivische Ansicht der erfindungsgemäßen Vorrichtung;
- Fig. 2: einen vertikalen Teilschnitt durch die in einem mittleren Gehäuseteil angeordnete Einrichtung zur Aufnahme der Hochvoltleiter und der Verbindungsvorrichtungen;
- Fig. 3: eine vergrößerte Teildarstellung aus Figur 1; und
- Fig. 4: einen horizontalen Schnitt durch die Kühlkanäle des die Aufnahmeräume bildenden Gehäuseteils und das stirnseitig am Gehäuseteil angeordnete Abschlussteil mit den Verbindungskanälen.

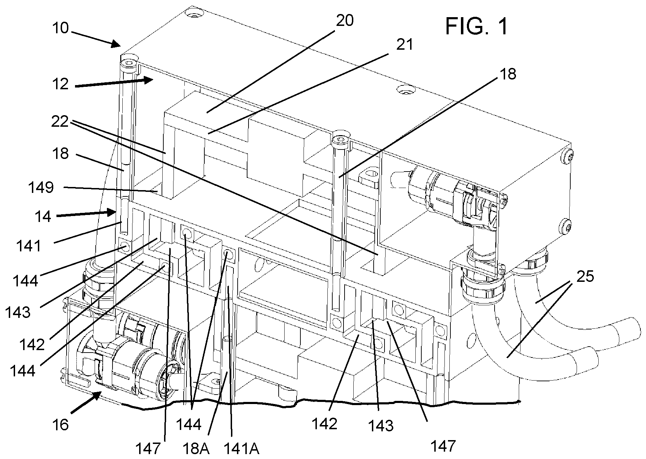

Die Figur 1 zeigt eine Vorrichtung 10 zum Verbinden von Hochvoltleitern. Eine derartige Vorrichtung 10 kommt beispielsweise im Bereich der Elektromobilität zum Einsatz. Über Hochvolt-Zuleitungen 25 in die Vorrichtung 10 eingespeiste elektrische Energie, die beispielsweise von einem nicht dargestellten Batteriemodul geliefert wird, wird im Inneren der Vorrichtung 10 über eine erste Hochvoltleitung 20, die einen horizontalen Abschnitt 21 und vertikale Abschnitte 22 aufweist, in eine leitende Verbindung mit wenigstens einem zweiten Hochvoltleiter 30 gebracht.

Die Vorrichtung 10 weist insgesamt drei Gehäuseteile 12 ,14 und 16 auf, von denen ein erstes oberes Gehäuseteil 12 die Verbindung von den Hochvolt-Zuleitungen 25 zum ersten Hochvoltleiter 20 herstellt.

Ein zweites, mittleres Gehäuseteil 14 bildet erste Aufnahmeräume 143 für die vertikalen Abschnitte 22 des ersten Hochvoltleiters 20, zweite Aufnahmeräume 142 für die zweiten Hochvoltleiter 30 und weitere Aufnahmeräume 147 für Verbindungsvorrichtungen 40.

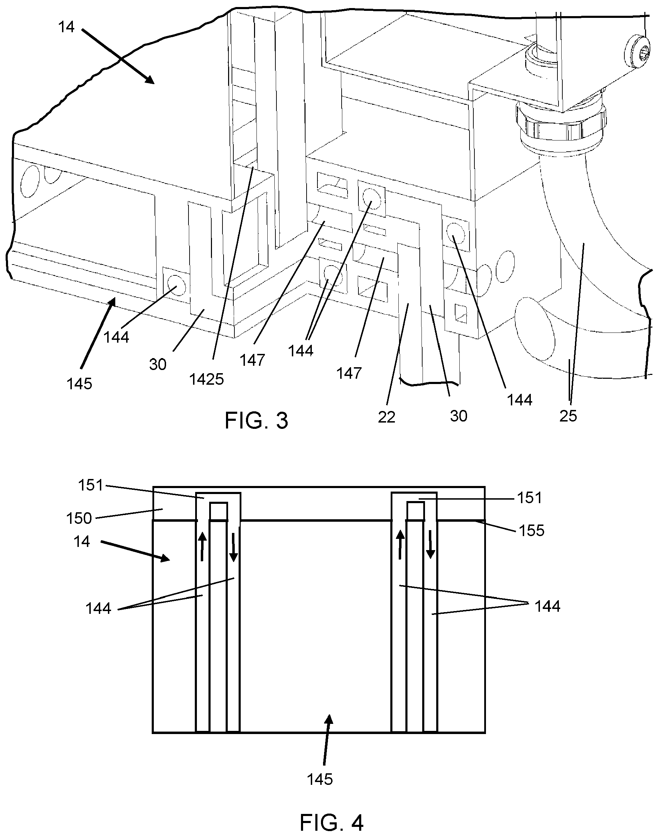

Die zweiten Aufnahmeräume 142 für den zweiten Hochvoltleiter 30 sind im Querschnitt L-förmig ausgebildet. Unmittelbar anschließend an den horizontalen Schenkel der Wandung des L-förmige Hohlraums der zweiten Aufnahmeräume 142 schließt sich nach oben ein erster Aufnahmeraum 143 an, in den von oben kommend ein vertikaler Abschnitt 22 eines ersten Hochvoltleiters 20 einmündet. Der vertikale Abschnitt 22 durchdringt dabei eine Aussparung 149 in einer oberen horizontalen Deckplatte des zweiten Gehäuseteils 14. Die zwischen dem ersten Aufnahmeraum 143 und dem zweiten Aufnahmeraum 142 liegende Trennwand des Gehäuseteils 14 weist im Bereich des vertikalen Abschnitts 22 eine Aussparung 1425 auf (siehe Figur 3). Durch diese Aussparung 1425 gelangen der vertikale Abschnitt 22 des ersten Hochvoltleiters 20 und der zweite Hochvoltleiter 30 in unmittelbare Anlage aneinander und werden dort durch den Druck einer nachfolgend beschriebenen Verbindungsvorrichtung 40 zusammengepresst.

Unmittelbar benachbart zu diesem Anlagebereich des ersten Hochvoltleiters 20, 22 und des zweiten Hochvoltleiters 30 bzw. zu den ersten Aufnahmeräumen 143 weist das Gehäuseteil 14 in horizontaler Lage einen weiteren Aufnahmeraum 147 für die Verbindungsvorrichtung 40 auf. Die Verbindungsvorrichtung 40 weist einen Kontaktbolzen 41 auf, der an seinem dem vertikalen Abschnitt 22 des ersten Hochvoltleiters 20 zugewandten Ende mit einem zylindrischen oder Quader-förmigen Druckstück 43 verbunden ist. Das Druckstück 43 durchdringt einen in seiner Form an dessen Querschnitt angepassten Durchbruch zwischen den Aufnahmeräumen 147 und 143. Der Durchbruch dient somit auch zur Führung des Druckstücks 43.

Das Druckstück 43 weist an seiner dem vertikalen Abschnitt 22 zugewandten Stirnseite eine Kugelkappen-förmige oder linsenförmige Kontur 44 auf.

Das Druckstück 43 wird auf seiner anderen Stirnseite von einem ersten Ende einer als Druckfeder ausgebildeten Feder 42 beaufschlagt, die den Kontaktbolzen 41 umgibt und sich mit einem zweiten Ende an einem den weiteren Aufnahmeraum 147 begrenzenden Widerlager 148 abstützt. Mittels einer Einstellvorrichtung 45, die beispielsweise als Einstellmutter gebildet sein kann, kann die Vorspannung der Feder 42 und/oder der Federweg, um den das Druckstück 43 gegen den Druck der Feder 42 ausweichen kann, vorzugsweise angepasst werden.

Mittels der Feder 42 wird das Druckstück 43 mit seiner gerundeten Kontur 44 gegen den vertikalen Abschnitt 22 gepresst, wodurch der erste Hochvoltleiter 20 in eine leitende Verbindung mit dem zweiten Hochvoltleiter 30 gerät. Die Anpresskraft der Feder 42 ist dabei so gewählt, dass auch hohe Ströme von mehr als 100 A bei hohen Spannungen von beispielsweise 400 V unter allen auf ein Fahrzeug einwirkenden äußeren Bedingungen (Schwingungen, Erschütterungen, Temperaturschwankungen, Feuchtigkeit) zuverlässig und weitestgehend verlustfrei übertragen werden.

Das untere Ende des vertikalen Abschnitts 22 ist auf der der Kontur 44 zugewandten Fläche vorzugsweise mit einer keilförmigen Abschrägung 23 versehen. Diese Abschrägung 23 ermöglicht, dass der vertikale Abschnitt 22 bei bereits montiertem ersten Hochvoltleiter 30 von oben her in den Aufnahmeraum 143 eingeschoben werden kann und dabei das von der Feder 42 belastete Druckstück 43 mit seiner gerundeten Kontur 44 entsprechend zur Seite geschoben wird.

Im mittleren Gehäuseteil 14 sind benachbart zu den Aufnahmeräumen 142 und 143 für die Hochvoltleiter 22 bzw. 30 mehrere Kühlkanäle 144 vorgesehen. Durch die Kühlkanäle 144 wird ein flüssiges Kühlmittel gepumpt, das zur Wärmeabfuhr der aufgrund der Übertragung hoher elektrischer Leistungen unvermeidbar entstehenden Wärme aus dem Verbindungsbereich der Hochvoltleiter 22 bzw. 30 dient.

Das mittlere Gehäuseteil 14 ist besonders bevorzugt als Strangpressprofil 145 und dabei weiter bevorzugt insbesondere aus einem hoch wärmeleitfähigen Kunststoff hergestellt. Durch diese Materialauswahl werden mehrere Vorteile gleichzeitig erreicht:
- der Wärmeübergang von den Hochvoltleitern 20, 21, 22; 30 zu den Kühlkanälen 144 funktioniert ausgezeichnet,
- komplexe Konturen der Aufnahmeräume 142, 143, 147 sind in einem Extrusionswerkzeug für Kunststoff einfach darstellbar,
- die Vorrichtung 10 ist gewichtssparend herstellbar, was insbesondere für eine Verwendung im Automobilbereich nützlich ist,
- der Kunststoff sorgt für eine hervorragende elektrische Isolierung der Hochvoltleiter20, 21, 22; 30 gegenüber der Umgebung.

Hierfür hat sich als besonders vorteilhaft erwiesen, dass der hoch wärmeleitfähige Kunststoff aus einem mit wärmeleitfähigen Bornitridfüllstoffen versehenen polymeren Werkstoff, insbesondere aus PA6, PA66, PBT, PPS, PEEK, LPS oder TPE besteht. Ein derartiger Werkstoff kann beispielsweise bei der Firma 3M^{®} bezogen werden.

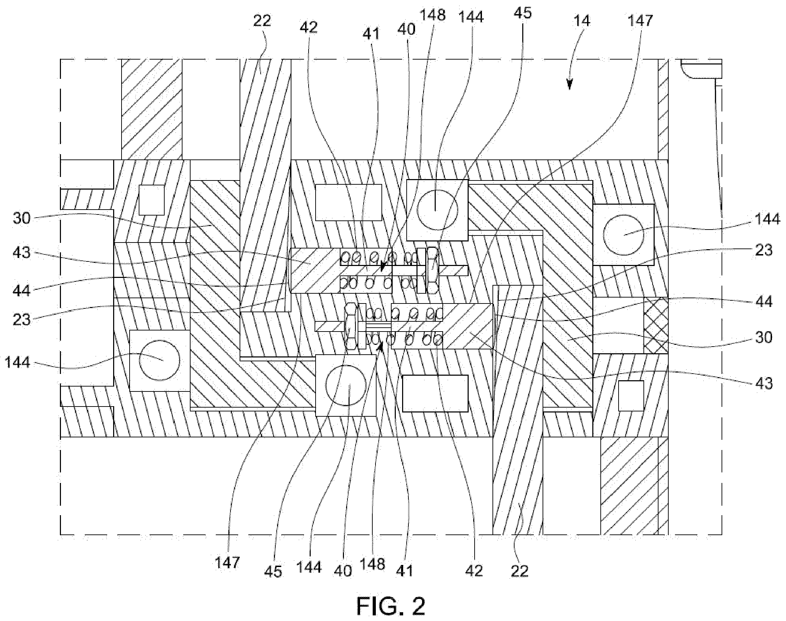

Wie in Figur 2 dargestellt, können mehrere Hochvoltleiter 20, 21, 22; 30 und mehrere Verbindungseinrichtungen 40 platzsparend durch eine gegenläufige nebeneinanderliegende Anordnung angeordnet werden.

Wie in Figur 4 dargestellt, können mehrere Kühlkanäle 144 durch U-förmige Verbindungskanäle 151 mäanderförmig miteinander verbunden werden, wobei die Verbindungskanäle 151 bevorzugt in einem Abschlussteil 150 angeordnet sind, das stirnseitig das als Strangpressprofil 145 ausgebildete mittlere Gehäuseteil 14 zumindest an einer Stirnseite dicht abschließt. Die Abdichtung wird dabei entweder durch eine im Bereich der Kühlkanäle 144 bzw. der Verbindungskanäle 151 ausgesparte Dichtung 155 oder durch eine entsprechende dauerhafte Verklebung an gleicher Stelle bewirkt.

Das obere, erste Gehäuseteil 12 und das mittlere, zweite Gehäuseteil 14 sind durch in Figur 1 gezeigte Verbindungsschrauben 18 und im mittleren Gehäuseteil 14 vorgesehene Befestigungsvorrichtungen 141 miteinander verbunden. Die Befestigungsvorrichtungen 141 können durch in das mittlere Gehäuseteil 14 eingearbeitete Gewinde gebildet sein. Alternativ dazu sind auch rechteckige Aufnahmekanäle zur formschlüssigen Aufnahme von Sechskant- oder Vierkantmuttern mit darüber angeordneten Durchgangsbohrungen möglich, durch welche die Verbindungsschrauben 18 in die betreffenden Muttern eingeschraubt werden. In gleicher Weise ist das untere, dritte Gehäuseteil 16 durch Verbindungsschrauben 18A mit Befestigungsvorrichtungen 141A am mittleren Gehäuseteil 14 verbunden.

In der erfindungsgemäßen Vorrichtung 10 können auch mehrere Hochvoltleiter als die im Ausführungsbeispiel gezeigten zwei Hochvoltleiter 20, 30 durch entsprechende Verbindungseinrichtungen 40 verbunden werden. Es ist ebenso möglich, zwei oder mehrere übereinander liegende Hochvoltleiter 20, 30 auch durch mehrere nebeneinander oder hintereinander angeordnete Verbindungseinrichtungen 40 zu verbinden, wobei dann durch mehrere durch Federn 42 erzeugte Anpresskräfte eine noch stärkere Verbindung der Hochvoltleiter erzielt wird.

Durch das mögliche nachträgliche Einpressen oder Herausziehen des vertikalen Abschnitts 22 kann die leitende Verbindung ohne Verwendung von Werkzeugen in einfacher Weise hergestellt oder wieder aufgelöst werden.

### Bezugszeichenliste

- 10: Vorrichtung
- 12: (erstes) Gehäuseteil
- 14: (zweites) Gehäuseteil
- 141, 141A: Befestigungsvorrichtung (Gewinde oder Aufnahme für Mutter)
- 142: (zweiter) Aufnahmeraum (für 30)
- 1425: Aussparung (zwischen 142 und 143)
- 143: (erster) Aufnahmeraum (für 20 bzw. 22)
- 144: Kühlkanal
- 145: Strangpressprofil
- 147: (weiterer) Aufnahmeraum (für 40)
- 148: Widerlager
- 149: Durchbruch
- 150: Abschlussteil
- 151: Verbindungskanal (in 150)
- 155: Dichtung
- 16: (drittes) Gehäuseteil
- 18, 18A: Verbindungsschraube
- 20: (erster) Hochvoltleiter
- 21: (horizontaler) Abschnitt (von 20)
- 22: (vertikaler) Abschnitt (von 20)
- 23: Abschrägung
- 25: Hochvolt-Zuleitung
- 30: (zweiter) Hochvoltleiter
- 40: Verbindungsvorrichtung
- 41: Kontaktbolzen
- 42: Feder
- 43: Druckstück
- 44: (kugelabschnittsförmige oder linsenförmige) Kontur (an 43)
- 45: Einstellvorrichtung (z.B. Einstellmutter)

## Patentansprüche

1. Vorrichtung (10) zum Verbinden von Hochvoltleitern (20, 21, 22; 30) umfassend wenigstens einen ersten Hochvoltleiter (20, 21, 22), wenigstens einen zweiten Hochvoltleiter (30), eine Einrichtung (14) zur Aufnahme des ersten Hochvoltleiters (20, 21, 22) und zweiten Hochvoltleiters (30) und wenigstens eine Verbindungsvorrichtung (40) zum stromleitenden Verbinden des wenigstens einen ersten Hochvoltleiters (20, 21, 22) mit dem wenigstens einen zweiten Hochvoltleiter (30), wobei die Verbindungsvorrichtung (40) wenigstens einen mittels wenigstens einer Feder (42) vorgespannten Kontaktbolzen (41) zum Zusammenpressen des wenigstens einen ersten Hochvoltleiters (20, 21, 22) mit dem wenigstens einen zweiten Hochvoltleiter (30) aufweist, wobei die Verbindungsvorrichtung (40) wenigstens einen Aufnahmeraum (142, 143) für wenigstens einen der Hochvoltleiter (20, 21, 22; 30) und wenigstens ein Widerlager (148) für die Feder (42) bildet, wobei der Kontaktbolzen (41) an einem Ende ein zur Anlage an einem der Hochvoltleiter (20, 21, 22; 30) geeignetes Druckstück (43) aufweist.

2. Vorrichtung (10) nach Anspruch 1, **dadurch gekennzeichnet, dass** die Einrichtung (14) einen ersten Aufnahmeraum (143) für den ersten Hochvoltleiter (20, 21, 22) und einen zweiten Aufnahmeraum (142) für den zweiten Hochvoltleiter (30) mit einem gemeinsamen offenen Verbindungsbereich aufweisen, der eine unmittelbar berührende Anlage des ersten Hochvoltleiters (20, 21, 22) und des zweiten Hochvoltleiters (30) aneinander ermöglicht.

3. Vorrichtung (10) nach Anspruch 1 oder 2, **dadurch gekennzeichnet, dass** das Druckstück (43) an seiner den Hochvoltleitern (20, 21, 22; 30) zugewandten Stirnseite eine kugelabschnittsförmige oder linsenförmige Kontur (44) aufweist.

4. Vorrichtung (10) nach einem der vorhergehenden Ansprüche, **dadurch gekennzeichnet, dass** die Vorspannkraft der Feder (42) mittels einer Einstellvorrichtung (45) einstellbar ist.

5. Vorrichtung (10) nach einem der vorhergehenden Ansprüche, **dadurch gekennzeichnet, dass** die Aufnahmeräume (142, 143) für die Hochvoltleiter (20, 21, 22; 30) und ein weiterer Aufnahmeraum (147) für die Verbindungsvorrichtung (40) in einem gemeinsamen Gehäuseteil (14) der Vorrichtung (10) angeordnet sind.

6. Vorrichtung (10) nach einem der vorhergehenden Ansprüche, **dadurch gekennzeichnet, dass** benachbart zu den Aufnahmeräumen (142, 143) für die Hochvoltleiter (20, 21, 22; 30) Kühlkanäle (144) zur Führung eines flüssigen Kühlmediums vorgesehen sind.

7. Vorrichtung (10) nach Anspruch 5oder 6, **dadurch gekennzeichnet, dass** das Gehäuseteil (14) als Strangpressprofil (145) ausgebildet ist.

8. Vorrichtung (10) nach Anspruch 7, **dadurch gekennzeichnet, dass** das Strangpressprofil (145) aus einem hoch wärmeleitfähigen Kunststoff ausgebildet ist.

9. Vorrichtung (10) nach Anspruch 6 und 7 oder 6 und 8, **dadurch gekennzeichnet, dass** wenigstens zwei Kühlkanäle (144) durch wenigstens einen Verbindungskanal (151) verbunden sind, der in zumindest einem an wenigstens eine Stirnseite des Strangpressprofils (145) dicht angrenzenden Abschlussteil (150) ausgebildet ist.

10. Vorrichtung (10) nach wenigstens einem der Ansprüche 5 bis 9, **dadurch gekennzeichnet, dass** das Gehäuseteil (14) Befestigungsvorrichtungen (141) zur Verbindung mit wenigstens einem benachbarten Gehäuseteil (12) aufweist.

11. Vorrichtung (10) nach Anspruch 10, **dadurch gekennzeichnet, dass** die Befestigungsvorrichtungen (141) zur Aufnahme wenigstens eines Gewindes oder einer ein Gewinde aufweisenden Mutter ausgebildet sind.

12. Vorrichtung (10) nach einem der vorhergehenden Ansprüche, **dadurch gekennzeichnet, dass** der dem Kontaktbolzen (141) zugewandte Hochvoltleiter (20, 21, 22) an einem Ende eine seine Dicke vermindernde Abschrägung (23) aufweist.

## Claims

1. Apparatus (10) for connecting high-voltage conductors (20, 21, 22; 30) comprising at least one first high-voltage conductor (20, 21, 22), at least one second high-voltage conductor (30), a device (14) for receiving the first high-voltage conductor (20, 21, 22) and second high-voltage conductor (30) and at least one connecting device (40) for the current-conducting connection of the at least one first high-voltage conductor (20, 21, 22) to the at least one second high-voltage conductor (30), wherein the connecting device (40) comprises at least one contact bolt (41) pretensioned by means of at least one spring (42) for pressing together the at least one first high-voltage conductor (20, 21, 22) with the at least one second high-voltage conductor (30), wherein the connecting device (40) comprises at least one receiving space (142, 143) for at least one of the high-voltage conductors (20, 21, 22, 30) and at least one abutment (142, 143) and at least one abutment (148) for the spring (42),
wherein the contact bolt (41) comprises at one end a pressure piece (43) adapted to abut against one of the high-voltage conductors (20, 21, 22; 30).

2. The apparatus (10) according to claim 1, **characterized in that** the device (14) comprises a first receiving space (143) for the first high-voltage conductor (20, 21, 22) and a second receiving space (142) for the second high-voltage conductor (30) with a common open connection area which enables the first high-voltage conductor (20, 21, 22) and the second high-voltage conductor (30) to come into direct contact with one another.

3. The apparatus (10) according to claim 1 or 2, **characterized in that** the pressure piece (43) comprises a spherical section-shaped or lenticular contour (44) on its end face facing the high-voltage conductors (20, 21, 22; 30).

4. The apparatus (10) according to one of the preceding claims, **characterized in that** the preload force of the spring (42) is adjustable by means of an adjusting device (45).

5. The apparatus (10) according to one of the preceding claims, **characterized in that** the receiving spaces (142, 143) for the high-voltage conductors (20, 21, 22; 30) and a further receiving space (147) for the connecting device (40) are arranged in a common housing part (14) of the apparatus (10).

6. The apparatus (10) according to one of the preceding claims, **characterized in that** cooling channels (144) for guiding a liquid cooling medium are provided adjacent to the receiving spaces (142, 143) for the high-voltage conductors (20, 21, 22; 30).

7. The apparatus (10) according to claim 5 or 6, **characterized in that** the housing part (14) is configured as an extruded profile (145).

8. The apparatus (10) according to claim 7, **characterized in that** the extruded profile (145) is configured from a highly thermally conductive plastic.

9. The apparatus (10) according to claim 6 and 7 or 6 and 8, **characterized in that** at least two cooling channels (144) are connected by at least one connecting channel (151) which is configured in at least one end part (150) which is sealingly adjoining at least one end face of the extruded profile (145).

10. The apparatus (10) according to at least one of claims 5 to 9, **characterized in that** the housing part (14) comprises fastening devices (141) for connection to at least one adjacent housing part (12).

11. The apparatus (10) according to claim 10, **characterized in that** the fastening devices (141) are configured to receive at least one thread or a nut comprising a thread.

12. The apparatus (10) according to one of the preceding claims, **characterized in that** the high-voltage conductor (20, 21, 22) facing the contact bolt (141) comprises at one end a chamfer (23) which reduces its thickness.

## Revendications

1. Dispositif (10) pour relier des conducteurs à haute tension (20, 21, 22 ; 30) comprenant au moins un premier conducteur à haute tension (20, 21, 22), au moins un deuxième conducteur à haute tension (30), un dispositif (14) destiné à recevoir le premier conducteur à haute tension (20, 21, 22) et le deuxième conducteur à haute tension (30) et au moins un dispositif de connexion (40) destiné à relier par conduction de courant l'au moins un premier conducteur à haute tension (20, 21, 22) avec l'au moins un deuxième conducteur à haute tension (30), le dispositif de connexion (40) présentant au moins un boulon de contact (41) précontraint au moyen d'au moins un ressort (42) pour comprimer l'au moins un premier conducteur à haute tension (20, 21, 22) avec l'au moins un deuxième conducteur à haute tension (30), dans lequel le dispositif de connexion (40) présente au moins un espace de réception (142, 143) pour au moins l'un des conducteurs à haute tension (20, 21, 22) ; 30) et au moins une butée (148) pour le ressort (42),
dans lequel le boulon de contact (41) présente à une extrémité une pièce de pression (43) appropriée pour l'application sur l'un des conducteurs à haute tension (20, 21, 22 ; 30).

2. Dispositif (10) selon la revendication 1, **caractérisé en ce que** le dispositif (14) comporte un premier espace de réception (143) pour le premier conducteur à haute tension (20, 21, 22) et un deuxième espace de réception (142) pour le deuxième conducteur à haute tension (30) avec une zone de liaison ouverte commune qui permet un appui en contact direct du premier conducteur à haute tension (20, 21, 22) et du deuxième conducteur à haute tension (30) l'un contre l'autre.

3. Dispositif (10) selon la revendication 1 ou 2, **caractérisé en ce que** la pièce de pression (43) présente, sur sa face frontale tournée vers les conducteurs à haute tension (20, 21, 22 ; 30), un contour (44) en forme de segment de sphère ou de lentille.

4. Dispositif (10) selon l'une des revendications précédentes, **caractérisé en ce que** la force de précontrainte du ressort (42) est réglable au moyen d'un dispositif de réglage (45).

5. Dispositif (10) selon l'une des revendications précédentes, **caractérisé en ce que** les espaces de réception (142, 143) pour les conducteurs haute tension (20, 21, 22 ; 30) et un autre espace de réception (147) pour le dispositif de connexion (40) sont disposés dans une partie de boîtier (14) commune du dispositif (10).

6. Dispositif (10) selon l'une des revendications précédentes, **caractérisé en ce que** des canaux de refroidissement (144) sont prévus au voisinage des espaces de réception (142, 143) pour les conducteurs à haute tension (20, 21, 22 ; 30) pour le guidage d'un agent de refroidissement liquide.

7. Dispositif (10) selon la revendication 5 ou 6, **caractérisé en ce que** la partie de boîtier (14) est conçue comme un profilé extrudé (145).

8. Dispositif (10) selon la revendication 7, **caractérisé en ce que** le profilé extrudé (145) est réalisé en une matière plastique à haute conductivité thermique.

9. Dispositif (10) selon les revendications 6 et 7 ou 6 et 8, **caractérisé en ce qu'**au moins deux canaux de refroidissement (144) sont reliés par au moins un canal de liaison (151) qui est formé dans au moins une partie de fermeture (150) adjacente de manière étanche à au moins une face frontale du profilé extrudé (145).

10. Dispositif (10) selon au moins l'une des revendications 5 à 9, **caractérisé en ce que** la partie de boîtier (14) comporte des moyens de fixation (141) pour la liaison avec au moins une partie de boîtier (12) adjacente.

11. Dispositif (10) selon la revendication 10, **caractérisé en ce que** les moyens de fixation (141) sont conçus pour recevoir au moins un filet ou un écrou présentant un filetage.

12. Dispositif (10) selon l'une des revendications précédentes, **caractérisé en ce que** le conducteur haute tension (20, 21, 22) orienté vers le boulon de contact (141) présente à une extrémité un chanfrein (23) réduisant son épaisseur.
